(19) **Europäisches Patentamt / European Patent Office / Office européen des brevets**

(11) **EP 4 741 447 A1**

(12) **EUROPEAN PATENT APPLICATION**
published in accordance with Art. 153(4) EPC

(43) Date of publication:
**13.05.2026 Bulletin 2026/20**

(21) Application number: **23944334.4**

(22) Date of filing: **05.07.2023**

(51) International Patent Classification (IPC):
*C08J 5/18* (2006.01)

(52) Cooperative Patent Classification (CPC):
**C08J 5/18**

(86) International application number:
**PCT/JP2023/024865**

(87) International publication number:
**WO 2025/009082 (09.01.2025 Gazette 2025/02)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Kao Corporation**
**Tokyo 103-8210 (JP)**

(72) Inventors:
- **FUKUDA, Yuki**
  **Tokyo 103-8210 (JP)**
- **NIITSU, Taichi**
  **Tokyo 103-8210 (JP)**

(74) Representative: **Vossius & Partner Patentanwälte Rechtsanwälte mbB Siebertstraße 3 81675 München (DE)**

(54) **FILM**

(57)     In an embodiment of the present invention, in a film in which polypropylene is dispersed in polyethylene, deterioration in quality due to polypropylene can be suppressed. In a film according to the embodiment of the present invention, a dispersed phase is dispersed in a matrix phase. The film includes a matrix phase containing polyethylene and a dispersed phase containing polypropylene. The dispersed phase includes at least a flat phase oriented in an MD direction and the flat phase has an average aspect ratio of 15 or more.

FIG.1

## Description

Technical Field

The present invention relates to a film containing polyethylene.

Background Art

A technology has been known that recycles polyethylene films (see, for example, Patent Literature 1). The technology described in Patent Literature 1 allows used polyethylene films to be regenerated into new polyethylene films by providing a special cleaning process for sufficiently cleaning mud and the like adhered to the polyethylene films used in fields or the like.

There is also known a technology that recycles waste resin films whose main component is a resin other than polyethylene as one component of polyethylene films (see, for example, Patent Literature 2). This technology allows the amount of virgin materials of polyethylene used to be reduced by the amount of waste resin films in the production of polyethylene films.

Citation List

Patent Literature

Patent Literature 1: Japanese Patent Application Laid-open No. 2002-052532
Patent Literature 2: Japanese Patent Application Laid-open No. 2004-182957

Disclosure of Invention

In a film according to an embodiment of the present invention, a dispersed phase is dispersed in a matrix phase.

The film includes a matrix phase containing polyethylene and a dispersed phase containing polypropylene.

The dispersed phase includes at least a flat phase oriented in an MD direction and the flat phase has an average aspect ratio of 15 or more.

In a method of producing a film in which a dispersed phase is dispersed in a matrix phase according to an embodiment of the present invention, a kneaded product is molded into a film, the kneaded product being obtained by kneading a first raw material that contains polyethylene and constitutes the matrix phase and a second raw material containing polypropylene as a component constituting the dispersed phase.

A ratio $\eta B/\eta A$ of viscosity $\eta B$ of polypropylene contained in the second raw material at a molding temperature during the molding of the film to viscosity $\eta A$ of the first raw material at the molding temperature is 0.015 or more and less than 1.

Brief Description of Drawings

[Fig. 1] Fig. 1 is a diagram schematically showing a partial cross section of a film according to an embodiment of the present invention.
[Fig. 2] Fig. 2 is a flowchart showing a method of producing the film.
[Fig. 3] Fig. 3 is a TEM image of the cross section of a kneaded product obtained in a kneading step.
[Fig. 4] Fig. 4 is a TEM image of the MD cross section of a film obtained in a film molding step.
[Fig. 5] Fig. 5 is a TEM image of the TD cross section of the film obtained in the film molding step.
[Fig. 6] Fig. 6 is a TEM image of the MD cross section of a film according to Comparative Example.
[Fig. 7] Fig. 7 is a TEM image of the MD cross section of a film according to Example 4.
[Fig. 8] Fig. 8 is a TEM image of the MD cross section of a film according to Example 24.

Detailed Description of the Invention

Absorbent articles such as diapers and sanitary napkins contain many resin-based components, and thus, recycling waste absorbent articles is highly significant. However, when polypropylene, which is abundant in absorbent articles, is used as a component of a polyethylene film, it tends to impair the quality of the polyethylene film in terms of strength, elongation, a smooth feel, and the like.

The present invention relates to suppressing deterioration in quality due to polypropylene in a film in which polypropylene is dispersed in polyethylene.

A film according to an embodiment of the present invention and a method of producing the same will be described.

[Configuration of film]

The film according to this embodiment includes a matrix phase and a dispersed phase, and has a configuration in which the dispersed phase is dispersed in the matrix phase. The matrix phase contains polyethylene. The dispersed phase includes a flat phase containing polypropylene.

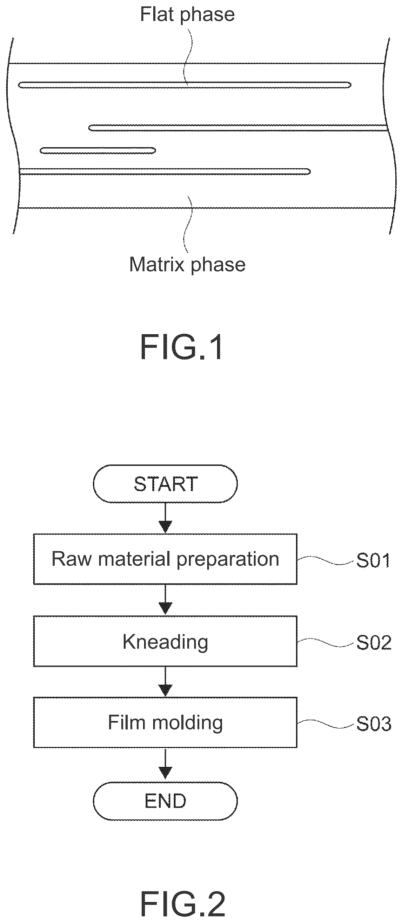

In Fig. 1, the right-and-left direction of the page corresponds to an MD direction (Machine Direction: flow direction of resin molding) of the film, the depth direction of the paper corresponds to a TD direction (Transverse Direction: direction orthogonal to MD) of the film, and the up-and-down direction of the paper corresponds to the thickness direction of the film. Each flat phase of the film according to this embodiment has a flat shape with an aspect ratio of 5 or more, is oriented in at least the MD direction of the in-plane direction, and is preferably oriented also in the TD direction. Further, the average aspect ratio of the flat phase of the film according to this embodiment, which is defined as the average value of the aspect ratios of the flat phase, is 15 or more, preferably 20 or more. Further, the average aspect ratio of the flat phase of the film according to this embodiment is preferably 100 or less, more preferably 50 or less, from the viewpoint of maintaining preferable low-temperature heat sealability. Each flat phase preferably extends omnidirectionally in the in-plane direction, but may extend only in the MD direction and be formed in a band or needle shape.

Further, the film according to this embodiment preferably includes, as a dispersed phase, a spherical phase that is formed of a resin and has an aspect ratio of 3 or less. The spherical phase contributes to improving the tear strength of the film. As the spherical phase, for example, at least one of polyethylene terephthalate or polyurethane may be included. In the film according to this embodiment, the content of the resin constituting the spherical phase is preferably 0.05 mass% or more and 20 mass% or less. Further, in the film according to this embodiment, the spherical phase preferably has an average particle size of 1 nm or more and 2 $\mu$m or less.

For the measurement of the aspect ratio of each dispersed phase, a TEM image taken with a transmission electron microscope (TEM) is used. The film to be observed is processed into an ultrathin section using an ultramicrotome and stained with a heavy metal (ruthenium tetroxide), making it possible to observe the state of the matrix phase and the dispersed phase. The observation surface of the film sample is the MD cross section formed by cutting it in a direction parallel to the MD direction. The observation magnification is set to 2500x or higher such that a rectangular field of view with the dimension in the in-plane direction of 14.3 $\mu$m or more and the dimension in the thickness direction of 14.3 $\mu$m or more is obtained. HT7820 (manufactured by Hitachi High-Tech Corporation) is used as a transmission electron microscope, and the acceleration voltage is set to 100 kV. Further, in this embodiment, the TEM image of the film sample can be used to measure not only the aspect ratio of each dispersed phase but also the cross-sectional area of each dispersed phase. As a result, it is possible to evaluate the content of the dispersed phase in the film and the ratio of the flat phase and the spherical phase in the dispersed phase on the basis of the cross-sectional area ratio.

For the measurement of the aspect ratio and the cross-sectional area of each dispersed phase observed in the TEM image of the film sample, image analysis software Image-Pro10 (Media Cybernetics) is used. The imported TEM image is scale-calibrated using the "Quick Space Calibration Function", 10 dispersed phases (objects) and matrix phases (backgrounds) are randomly enclosed using the "Smart (learning function)" and used for learning, and all dispersed phases are extracted. After that, the "radius ratio" and the "cross-sectional area" are measured with the "Hole filling" of the target extraction option selected. For each dispersed phase, this radius ratio is treated as the aspect ratio of the dispersed phase. In this embodiment, of the dispersed phases, those with an aspect ratio of 5 or more are defined as flat phases, and those with an aspect ratio of 3 or less are defined as spherical phases. Dispersed phases with a radius ratio of 5 or more are extracted from the measurement results, the average value of the radius ratios of the extracted dispersed phases is used as the average aspect ratio of the flat phase, and the sum of the cross-sectional areas of the dispersed phases with a radius ratio of 5 or more is used as the total cross-sectional area of the flat phase. Further, dispersed phases with a radius ratio of 3 or less are extracted from the measurement results, the average value of the radius ratios of the extracted dispersed phases is used as the average aspect ratio of the spherical phase, and the sum of the cross-sectional areas of the dispersed phases with a radius ratio of 3 or less is used as the total cross-sectional area of the spherical phase. The sum of the cross-sectional areas of all dispersed phases included in the measurement results is used as the total cross-sectional area of the dispersed phase. The field of view area of the TEM image is used as the total cross-sectional area of the film. By using these, various cross-sectional area ratios for the film can be obtained. For example, the ratio of the total cross-sectional area of the dispersed phase to the total cross-sectional area of the film, the ratio of the total cross-sectional area of the flat phase to the total cross-sectional area of the dispersed phase, the ratio of the total cross-sectional area of the spherical phase to the total cross-sectional area of the dispersed phase, and the like can be obtained.

In the film according to this embodiment, all of the flat phases are discontinued in the in-plane direction, making the matrix phases continuous in the thickness direction. That is, the configuration of the film according to this embodiment in which a flat phase is dispersed in a matrix phase is different from a stacked structure in which a matrix phase and a flat phase are alternately stacked in the thickness direction as a series of layers in the in-plane direction.

In this embodiment, the dimensions of each flat phase in the film thickness in each MD cross section is small, so that the physical properties of each flat phase are less likely to affect the physical properties of the entire film. Further, in the film according to this embodiment, the thin flat phase is widely present in the in-plane direction, and the polypropylene constituting the flat phase is widely disposed in the in-plane direction, so that polypropylene does not locally affect and uniform physical properties can be easily achieved along the in-plane direction. Further, in the film according to this embodiment, polypropylene is present as a flat phase, so that the polypropylene is less likely to affect the feel and the inherent smooth feel of polyethylene is easily achieved.

For this reason, in the film according to this embodiment, the physical properties of polyethylene constituting the matrix phase dominate regardless of the physical properties of polypropylene constituting the flat phase. That is, in the film according to this embodiment, regardless of the presence of polypropylene, high strength, high elongation, and a smooth feel that are comparable to those of the film formed of only polyethylene can be easily achieved. In the film according to this embodiment, it is preferable that the ratio of the flat phase in the entire dispersed phase is large. From this viewpoint, in the film according to this embodiment, the ratio of the total cross-sectional area of the flat phase to the total cross-sectional area of the dispersed phase in the TEM image is preferably 60% or more. Further, in the film according to this embodiment, the ratio of the total cross-sectional area of the spherical phase to the total cross-sectional area of the film in the TEM image is preferably 0.05% or more and 20% or less.

Therefore, in the film according to this embodiment, waste containing polypropylene derived from various articles can be recycled and used as one component. As a result, in the film according to this embodiment, the amount of virgin materials of polyethylene used can be reduced, allowing the environmental impact associated with production to be reduced.

Examples of the waste containing polypropylene include waste derived from absorbent articles such as sanitary napkins, baby diapers, and adult diapers. Examples of the waste derived from absorbent articles include used absorbent articles, absorbent articles that have been determined to be a defective product before shipping, and remnants generated during the manufacturing process of absorbent articles.

Examples of waste containing polypropylene that can be recovered from absorbent articles include a resin fiber and a resin film. The technology according to this embodiment expands the possibilities for recycling in terms of allowing even waste containing a mixture of a resin fiber and a resin film to be preferably reused as a resin film with high strength, high elongation, and a smooth feel. Further, since the resin contained in absorbent articles often has a higher melting point than polyethylene, blending waste derived from absorbent articles makes it easier to achieve high heat resistance, and the effect is expected to be greater as the aspect ratio of the flat phase increases.

In the film according to this embodiment, the lower the content of polyethylene and the higher the content of polypropylene, the more difficult it is to achieve high strength, high elongation, and a smooth feel. From this viewpoint, in the film according to this embodiment, the ratio of the cross-sectional area of polyethylene to the total cross-sectional area of the film in the TEM image taken by imaging a film with a transmission electron microscope is preferably 50% or more, more preferably 80% or more. Note that the cross-sectional area of polyethylene in the TEM image can be obtained as the cross-sectional area of the matrix phase obtained by subtracting the total cross-sectional area of the dispersed phase from the total cross-sectional area of the film, assuming that the region occupied by polyethylene and the region occupied by the matrix phase are the same. Further, in the film according to this embodiment, the ratio of the cross-sectional area of polypropylene to the total cross-sectional area of the film in the TEM image taken by imaging a film with a transmission electron microscope is preferably 50% or less, more preferably 20% or less. Note that the cross-sectional area of polypropylene in the TEM image can be obtained as the cross-sectional area of the flat phase, assuming that the region occupied by polypropylene and the region occupied by the flat phase are the same. Further, in the film according to this embodiment, the content of polyethylene is preferably 50 mass% or more, more preferably 80 mass% or more. Further, in the film according to this embodiment, the content of polypropylene is preferably 50 mass% or less, more preferably 20 mass% or less.

Further, in the film according to this embodiment, it is preferable to reduce the amount of virgin materials of polyethylene used, within a range that ensures sufficient quality in accordance with the application. From this viewpoint, in the film according to this embodiment, the ratio of the cross-sectional area of polyethylene to the total cross-sectional area of the film in the TEM image taken by imaging a film with a transmission electron microscope is preferably 99% or less, more preferably 80% or less. Further, in the film according to this embodiment, the ratio of the cross-sectional area of polypropylene to the total cross-sectional area of the film in the TEM image taken by imaging a film with a transmission electron microscope is preferably 1% or more, more preferably 20% or more. Further, in the film according to this embodiment, the content of polyethylene is preferably 99 mass% or less, more preferably 80 mass% or less. Further, in the film according to this embodiment, the content of polypropylene is preferably 1 mass% or more, more preferably 20 mass% or more.

The film according to this embodiment may include, as a dispersed phase, a flat phase whose main component is other than polypropylene. Further, the film according to this embodiment may include, as a dispersed phase, a phase other than the flat phase and the spherical phase. As a result, in the film according to this embodiment, it is possible to improve the quality by the dispersed phase other than the flat phase and the spherical phase. Note that in this embodiment, the "main component" refers to a component whose content is 50% or more.

For example, the film according to this embodiment preferably contains at least one of a styrene elastomer, an ethylene/$\alpha$-olefin copolymer (including those in which ethylene is present as a comonomer), an olefin resin with a polar group introduced, or a styrene resin with a polar group introduced. These components have the effects of aiding dispersion and enhancing the performance of the resin, contributing to improvements in the tensile elongation, tensile strength, and tear strength of the film. In the film according to this embodiment, the content of the resin constituting this phase is preferably 0.5 mass% or more and 15 mass% or less. Note that examples of the method of introducing polar groups include graft polymerization in which monomers are grafter together using an electron beam, the use of a monomer including a polar group during synthesis of a polymer, plasma treatment, and corona treatment.

Further, the film according to this embodiment preferably includes, as a dispersed phase, an inorganic material phase formed of an inorganic material. Examples of the inorganic material constituting the inorganic material phase include calcium carbonate and titanium oxide, and calcium carbonate and titanium oxide contribute to improving tear strength and suppressing transmission of ultraviolet rays. In the film according to this embodiment, from the viewpoint of molding stability, the content of the inorganic material is preferably 0 mass% or more and 60 mass% or less. Note that in the film according to this embodiment, when obtaining the content (mass%, ratio of the cross-sectional area in the TEM image) of the resin component constituting the matrix phase and the dispersed phase in the configuration including the inorganic material phase, the presence of the inorganic material phase (mass, cross-sectional area in the TEM image) is excluded from the calculation.

In the film according to this embodiment, from the viewpoint of reducing production costs, it is preferable to use components contained together with polypropylene in the waste as much as possible as the materials constituting the phases in the dispersed phase other than the flat phase. However, in the film according to this embodiment, any of these materials may be added separately from polypropylene.

The use of the film according to this embodiment is not particularly limited. As an example, the film according to this embodiment can be used as a packaging film for various products. Examples of the product suitable for using the film according to this embodiment as a packaging film include sanitary products, baby diapers, adult diapers, and daily necessities.

The film according to this embodiment preferably has desirable performance for use as a packaging film. For example, the film according to this embodiment preferably has high tensile elongation, high tensile strength, and high tear strength in order to achieve high durability as a packaging film. Specifically, in the film according to this embodiment, the tensile elongation is preferably 700% or more, more preferably 900% or more. Further, in the film according to this embodiment, the tensile strength per unit cross-sectional area is preferably 0.23 N/($\mu$m·cm) or more, more preferably 0.30 N/($\mu$m·cm) or more. Further, in the film according to this embodiment, the tear strength per unit thickness is preferably 0.015 N/$\mu$m or more, more preferably 0.045 N/$\mu$m or more.

In this embodiment, the tensile elongation and the tensile strength of the film are measured as follows. The film to be measured is punched out in accordance with the direction of the tensile test to prepare a dumbbell-shaped No. 3 test piece. The thickness of the necked portion of the test piece is measured with a micrometer and taken as a thickness C ($\mu$m). The punched test piece is fixed to a tensile tester (product name: AG-1S, manufactured by Shimadzu Corporation) with the chuck distance set to 50 mm. After fixing, the load read by the tensile tester is set to zero, and the test piece is elongated at a deformation rate of 300 mm/min until it breaks. The tensile elongation and the tensile strength are calculated as follows by reading an elongation amount A (mm) and a load B (N) during the elongation process from the obtained data, and using also the thickness C ($\mu$m) measured in advance. The tensile elongation and the tensile strength of the film are obtained as the average value of three test pieces in each of the MD direction and the TD direction.

```
Tensile elongation (%) = 100 × A (mm)/20 mm

Tensile strength (N/(µm·cm)) = B (N)/0.5 cm/C (µm)
```

In this embodiment, the tear strength of the film is measured as follows. A sample obtained by cutting the film to a length of 63 mm × a width of 76 mm in accordance with the direction of the tear test is fixed to an Elmendorf tear tester (analog type, manufactured by Toyo Seiki Seisaku-sho, Ltd.). At this time, the number of films to be fixed is appropriately adjusted such that the measurement results fall within 20 to 80% of the measurement range. The thickness of the film to be fixed is measured one by one using a micrometer in advance, and the average value thereof is taken as E (um). The pendulum is lifted and stopped, and the pointer is set to the starting position. The sample is carefully attached to the gripping tool, the clamp is firmly tightened, and then, a 20 mm long slit is made in the sample with the attached knife. Regarding the tear strength, the pendulum is carefully released, and the value obtained by reading the scale D of the force required to tear the sample is converted into tear strength (N) per sheet, and divided by the thickness E ($\mu$m) measured with the thickness gauge to calculate tear strength (N/um) per thickness. The tear strength of the film is obtained as the average value of three samples for each of the MD direction and the TD direction.

Further, the film according to this embodiment preferably has a good feel as a packaging film. In order to achieve a smooth feel, it is preferable that MMD (fluctuation in friction coefficient) and SMD (surface roughness) obtained by a KES surface test are small. In other words, the smaller the MMD and SMD obtained in the KES surface test, the smoother the feel of the film. In the film according to this embodiment, the higher the average aspect ratio of the flat phase, the smaller the obtained MMD and SMD tend to be. Specifically, in the film according to this embodiment, the MMD obtained by the KES surface test is preferably 0.05 or less, more preferably 0.025 or less. Further, in the film according to this embodiment, the SMD obtained by the KES surface test is preferably 3.0 or less, more preferably 1.5 or less.

The method of the KES surface test according to this embodiment is as follows. A sample obtained by cutting the film to be measured into 200 mm $\times$ 200 mm is set in an automated surface tester (product name: KES-FB4-A-SE, manufactured by KATO TECH CO., LTD.) such that the measurement surface is the outside of the balloon during inflation molding and the measurement direction is the MD direction, and tension is applied using a bar weight (147.8 g). Using the KES-FB SYSTEM data measurement program (KES-FB System Ver.8.03 WJ/For WinXP,7), the device is operated with SENS STD at a speed of 0.1 cm/sec to measure the friction and roughness, and MMD and SMD values are read. The MMD and SMD of the film are obtained as the average value of three samples. The measurement conditions for the friction are a static load of 50 gf and a dedicated 10 mm square piano wire sensor as a probe. The measurement conditions for the roughness are a static load of 10 gf and a dedicated 0.5 mm roughness sensor as a probe.

Further, in the film according to this embodiment, since fine recesses and projections are formed, a unique matte visual texture is easily achieved as compared with the film formed of only polyethylene. In this regard, in the film according to this embodiment, the glossiness of the surface is preferably 80 or less, more preferably 30 or less, in order to more effectively achieve such a visual texture as a packaging film. As the glossiness, a gloss meter (product name: HP-300, manufactured by TIME Group Inc.) is set on the film to be measured, and the measured value is used. However, if the measured value is 100 or more, the glossiness is taken as 100. The glossiness of the film is obtained as the average value of the values measured at five points. Further, in the film according to this embodiment, the fine recesses and projections scatter external light, thereby suppressing the transmission of ultraviolet rays. Therefore, for example, in the case where the film according to this embodiment is used as a packaging film, the content is less likely to deteriorate due to ultraviolet rays from sunlight, and high protective performance of the content is easily achieved.

In addition, the film according to this embodiment may be used as a packaging film having a surface on which a character representing a product name or product information, a design, or the like is printed. In this regard, in the film according to this embodiment, the wettability of the surface is preferably 40 mN/m or more by being subjected to surface treatment such as corona treatment, in order to achieve high printability on the surface. The wettability is evaluated as surface energy. Specifically, in order to evaluate the wettability of the film, several centimeters of dyne pen ink with 40 mN/m is applied to the film and whether or not the state is maintained for 2 to 4 seconds is observed. Specifically, the above observation is carried out three times, and if the applied state is maintained without forming droplets all three times, the wettability of the film is determined to be 40 mN/m or more.

[Method of producing film]

Although an example of a method of producing the film according to this embodiment will be described below with reference to Fig. 2, the method of producing the film according to this embodiment is not limited to the example shown in Fig. 2. The method of producing the film shown in Fig. 2 includes a raw material preparation step (Step S01), a kneading step (Step S02), and a film molding step (Step S03).

(Step S01: Raw material preparation)

In Step S01, raw materials of the film according to this embodiment are prepared. Specifically, in Step S01, a first raw material and a second raw material are prepared. The first raw material is a virgin material of polyethylene constituting a matrix phase. The second raw material is a recycled material containing polypropylene constituting a flat phase of a dispersed phase.

The first raw material can be prepared as, for example, a commercially available polyethylene pellet. The second raw material can be prepared as, for example, a pellet obtained by repelletizing waste containing polypropylene. The conditions for repelletizing the second raw material can be appropriately determined in accordance with the physical properties of components forming waste, or the like.

The second raw material preferably contains, for example, at least one of a thermoplastic resin or a thermosetting resin having a melting point 100°C or more higher than that of the first raw material, as a component constituting a spherical phase. As such a component, for example, at least one of polyethylene terephthalate or polyurethane may be contained.

Further, the second raw material may also contain at least one of a styrene elastomer, an ethylene/$\alpha$-olefin copolymer, an olefin resin with a polar group introduced, or a styrene resin with a polar group introduced. Further, the second raw material may contain an inorganic material constituting an inorganic material phase.

The viscosity $\eta$A of the first raw material formed of polyethylene is adjusted in accordance with the viscosity $\eta$B of polypropylene contained in the second raw material. More specifically, the viscosity $\eta$A of the first raw material is adjusted with reference to the molding temperature during the molding into a film in Step S03 such that the ratio $\eta$B/$\eta$A of the viscosity $\eta$B to the viscosity $\eta$A at the molding temperature is 0.015 or more and less than 1.

The viscosity $\eta$A of the first raw material and the viscosity $\eta$B of polypropylene contained in the second raw material are measured as follows. The barrel of "Capilograph" (product name: CAPILOGRAPH 1B, manufactured by Toyo Seiki Seisaku-sho, Ltd.) heated to the measurement temperature in advance is filled with a resin, and the viscosity value (Pa·s) is read from the load when the piston is extruded at a rate of 10 mm/min in "capillary flow test" mode of a program "capilograph of windows (registered trademark)". A nozzle with $\varphi$1 mm $\times$ a length of 10 mm is used, and a barrel with a diameter of 9.55 mm is used.

(Step S02: Kneading)

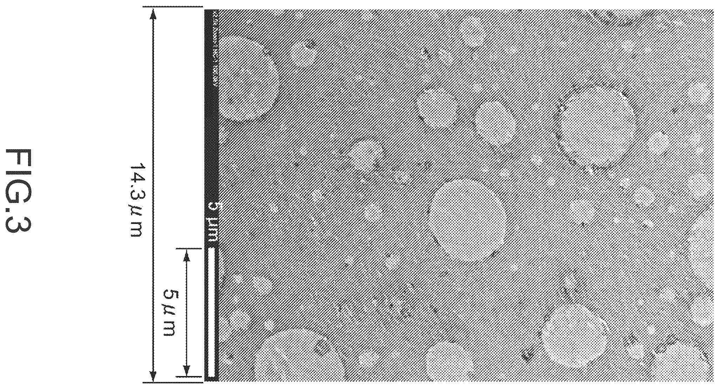

In Step S02, a kneaded product is prepared by kneading the first raw material and the second raw material prepared in Step S01. Fig. 3 is a TEM image of the cross section of the kneaded product obtained in Step S02, which is taken with a transmission electron microscope. In the structure shown in Fig. 3, a light-colored dispersed phase is dispersed in a dark-colored matrix phase.

The matrix phase contains polyethylene as a main component, and can contain polyethylene constituting one component of the second raw material, in addition to polyethylene constituting the first raw material. In the structure shown in Fig. 3, the dispersed phase containing polypropylene as a main component appears as relatively large circular regions, and the other dispersed phase appears as fine dot regions.

At the stage of the kneaded product obtained in Step S02, the dispersed phase containing polypropylene as a main component has a spherical shape with an average aspect ratio of 3 or less. In this embodiment, during the process of molding the kneaded product into a film in Step S03, the dispersed phase containing polypropylene as a main component is made a flat phase by causing it to have a flat shape with an average aspect ratio of 5 or more.

In the film according to this embodiment, by making the dispersed phase containing polypropylene as a main component a flat phase as described above, polypropylene is widely dispersed in the in-plane direction. Therefore, in this embodiment, there is little need to increase the dispersibility of the dispersed phase containing polypropylene as a main component to a highly fine level in the kneading according to Step S02.

For this reason, in Step S02, it is preferable to use a single-screw extruder rather than a sophisticated kneading technology using a twin-screw extruder or the like, from the viewpoint of reducing the number of processes. As a result, in the film according to this embodiment, it is possible to reduce the production costs. However, a twin-screw extruder may be used as necessary, and a single-screw extruder and a twin-screw extruder may be used in combination.

Further, in Step S02, it is advantageous that the viscosity ratio between polyethylene and polypropylene is small, and the interfacial tension between the matrix phase and the dispersed phase is small, in order to make the dispersed phase finer. From this viewpoint, the temperature of the kneading in Step S02 is preferably 200°C or more and 300°C or less. In Step S02, during the process of generating a kneaded product with the extruder, the temperature of all regions through which the raw material passes excluding the supply port of the raw material is preferably within the above range. However, in a partial region, the temperature may be outside the above range.

(Step S03: Film molding)

In Step S03, the kneaded product prepared in Step S02 is thinly stretched and thus molded into a film. Since the viscosity $\eta$A of the first raw material is adjusted such that the ratio $\eta$B/$\eta$A of the viscosity $\eta$B to the viscosity $\eta$A at the molding temperature is 0.015 or more and less than 1, the dispersed phase containing polypropylene as a main component is made a flat phase during the process of stretching the kneaded product.

That is, in this embodiment, by setting the ratio $\eta$B/$\eta$A at the molding temperature to be within the above range, the matrix phase is stretched without being affected by polypropylene, and at the same time, the dispersed phase containing polypropylene as a main component is deformed in accordance with the deformation of the matrix phase. In this way, the dispersed phase containing polypropylene as a main component thinly stretched together with the matrix phase is made a flat phase.

In the method of producing the film according to this embodiment, it has been found that by setting the molding temperature of the kneaded product in Step S03 to relatively high, the ratio $\eta B/\eta A$ of the viscosity $\eta B$ to the viscosity $\eta A$ at the molding temperature easily remains less than 1. Further, the high molding temperature is also advantageous in order to suppress the force of the deformed flat phase to return to the spherical shape due to the interfacial tension. However, raising the molding temperature too high can result in problems such as deterioration of moldability and degradation of the resin. From these viewpoints, the molding temperature of the kneaded product in Step S03 is preferably 200°C or more and 300°C or less, more preferably 215°C or more and 280°C or less. Further, in the case where the raw material contains polyethylene terephthalate, it is preferable to set the molding temperature to the melting point of polyethylene terephthalate or higher to melt polyethylene terephthalate once. As a result, while absorbent articles often contain fibrous polyethylene terephthalate, such polyethylene terephthalate contained in a non-spherical form in the raw material can also be made a spherical phase.

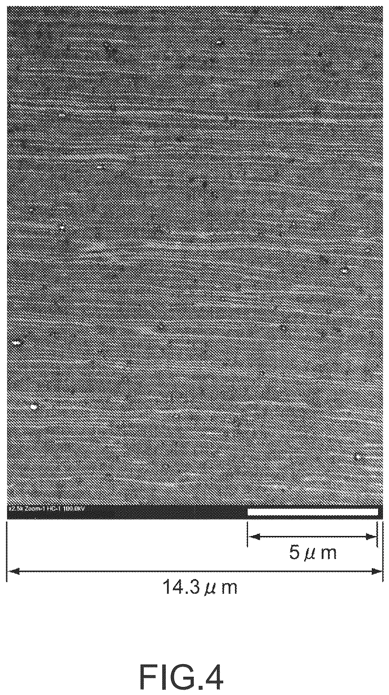

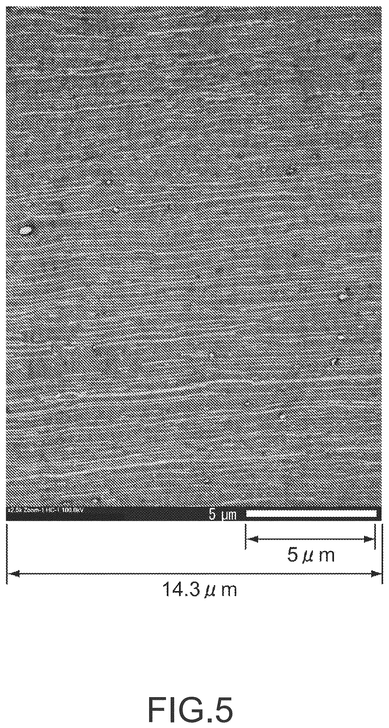

Fig. 4 is a TEM image of the MD cross section of the film obtained in Step S03, which is taken with a transmission electron microscope. Fig. 5 is a TEM image of the TD cross section of the film obtained in Step S03, which is obtained with a transmission electron microscope. The matrix phase is similar to the matrix phase of the kneaded product shown in Fig. 3. In Fig. 4,5, the right-and-left direction and depth direction of the page correspond to the in-plane direction of the film, and the up-and-down direction of the page corresponds to the thickness direction of the film. In the structure shown in Fig. 4, 5, it can be seen that the circular dispersed phase containing polypropylene as a main component shown in Fig. 3 is thinly stretched to be made a flat phase.

The method of molding the kneaded product into a film according to this embodiment is not limited to a specific method, but it is preferable to use an inflation molding method. In the inflation molding method, since efficient stretching can be achieved in not only the MD direction but also the TD direction, the influence of polypropylene can be suppressed in not only the MD direction but also the TD direction.

The film molding device used in the inflation molding method can be, for example, integrated with an extruder to be used for kneading and configured to receive the discharge of the kneaded product directly from the extruder. Note that the molding temperature in inflation molding refers to the temperature of the kneaded product at the time point when the kneaded product is discharged from the die. Further, in inflation molding, the temperature of the kneaded product is preferably 200°C or more and 300°C or less, more preferably 215°C or more and 280°C or less, throughout the entire process from the time point when the kneaded product is discharged from the extruder to the completion of subsequent molding. However, in inflation molding, the temperature of the kneaded product may be outside the above range at any time other than the time point when the kneaded product is discharged from the extruder.

[Other embodiments]

Although an embodiment of the present invention has been described above, the present invention is not limited to only the above-mentioned embodiment, and it goes without saying that various modifications can be made without departing from the essence of the present invention.

For example, the method of producing the film according to this embodiment may include a step other than the above steps, as necessary. For example, after the film molding step, surface treatment for modifying the surface of the film may be performed. One example of such surface treatment is corona treatment for improving the wettability of the surface of the film. Further, after the film molding step, a slit may be formed or the film may be processed into a bag.

Further, in the method of producing the film according to this embodiment, as the second raw material, a kneaded product obtained by kneading a recycled material with another material may be used. Further, in the method of producing the film according to this embodiment, as the second raw material, it does not necessarily need to use the recycled material, and a virgin material of polypropylene or a kneaded product obtained by kneading this virgin material with another material may be used, for example. In addition, in the method of producing the film according to this embodiment, the first raw material may be not a virgin material but a recycled material of waste containing polyethylene. Further, in the method of producing the film according to this embodiment, in the kneading process, a different material other than the first raw material and the second raw material may be added and kneaded.

Further, with respect to the above-mentioned embodiment, the present invention further discloses the following configurations.

<1> A film in which a dispersed phase is dispersed in a matrix phase, comprising:

a matrix phase containing polyethylene; and
a dispersed phase containing polypropylene,
the dispersed phase including at least a flat phase oriented in an MD direction, the flat phase having an average aspect ratio of 15 or more.

<2> The film according to <1>, wherein

a ratio of a total cross-sectional area of the flat phase to a total cross-sectional area of the dispersed phase in an image of the film taken with a transmission electron microscope is 60% or more.

<3> The film according to <1> or <2>, wherein
the dispersed phase further includes a spherical phase that includes a resin and has an aspect ratio of 3 or less.

<4> The film according to <3>, wherein
the spherical phase further contains at least one of polyethylene terephthalate or polyurethane.

<5> The film according to any one of <1> to <4>, wherein
the dispersed phase further includes an inorganic material phase.

<6> The film according to any one of <1> to <5>, wherein
a ratio of a total cross-sectional area of polyethylene to a total cross-sectional area of the film in an image of the film taken with a transmission electron microscope is 50% or more and 99% or less.

<7> The film according to any one of <1> to <6>, wherein
a ratio of a total cross-sectional area of polypropylene to a total cross-sectional area of the film in an image of the film taken with a transmission electron microscope is 1% or more and 50% or less.

<8> The film according to any one of <1> to <7>, which has a tensile elongation of 700% or more.

<9> The film according to any one of <1> to <8>, which has tensile strength of 0.23 N/($\mu$m·cm) or more.

<10> The film according to any one of <1> to <9>, which has tear strength of 0.015 N/ $\mu$m or more.

<11> The film according to any one of <1> to <10>, which has MMD by a KES surface test of 0.05 or less.

<12> The film according to any one of <1> to <11>, which has SMD by a KES surface test of 3.0 or less.

<13> The film according to any one of <1> to <12>, wherein
glossiness of a surface of the film is 80 or less.

<14> The film according to any one of <1> to <13>, wherein
wettability of a surface of the film is 40 mN/m or more.

<15> The film according to any one of <1> to <14>, wherein
waste derived from an absorbent article is used as part of a raw material.

<16> A method of producing a film in which a dispersed phase is dispersed in a matrix phase, comprising:

molding a kneaded product into a film, the kneaded product being obtained by kneading a first raw material that contains polyethylene and constitutes the matrix phase and a second raw material containing polypropylene as a component constituting the dispersed phase,
a ratio $\eta B/\eta A$ of viscosity $\eta B$ of polypropylene contained in the second raw material at a molding temperature during the molding of the film to viscosity $\eta A$ of the first raw material at the molding temperature being 0.015 or more and less than 1.

<17> The method of producing a film according to <16>, wherein
the second raw material includes waste derived from an absorbent article.

<18> The method of producing a film according to <16> or <17>, wherein
a single-screw extruder is used to knead the first raw material and the second raw material.

<19> The method of producing a film according to any one of <16> to <18>, wherein
the kneaded product is molded into a film using an inflation molding method.

<20> The method of producing a film according to any one of <16> to <19>, wherein
the second raw material further includes, as a component constituting the dispersed phase, at least one of a thermoplastic resin or a thermosetting resin having a melting point 100°C or more higher than that of the first raw material.

<21> The method of producing a film according to any one of <16> to <20>, wherein
a surface of the molded film is subjected to corona treatment.

<22> The method of producing a film according to any one of <16> to <21>, wherein
the molding temperature is 200°C or more and 300°C or less.

<23> The film according to any one of <1> to <15>, wherein
the flat phase is oriented in the MD direction and a TD direction.

<24> The film according to any one of <1> to <15> and <23>, wherein
a ratio of a total cross-sectional area of polyethylene to a total cross-sectional area of the film in an image of the film taken with a transmission electron microscope is 60% or more.

<25> The film according to any one of <1> to <15>, <23>, and <24>, wherein
a ratio of a total cross-sectional area of polypropylene to a total cross-sectional area of the film in an image of the film taken with a transmission electron microscope is 40% or less.

<26> The film according to any one of <1> to <15> and <23> to <25>, wherein
a content of polyethylene is 50 mass% or more.

<27> The film according to any one of <1> to <15> and <23> to <26>, wherein
a content of polypropylene is 50 mass% or less.

<28> The film according to any one of <1> to <15> and <23> to <27>, wherein
a ratio of a total cross-sectional area of polyethylene to a total cross-sectional area of the film in an image of the film taken with a transmission electron microscope is 99% or less.

<29> The film according to any one of <1> to <15> and <23> to <27>, wherein
a ratio of a total cross-sectional area of polypropylene to a total cross-sectional area of the film in an image of the film taken with a transmission electron microscope is 1% or more.

<30> The film according to any one of <1> to <15> and <23> to <29>, wherein
a content of polyethylene is 99 mass% or less.

<31> The film according to any one of <1> to <15> and <23> to <30>, wherein
a content of polypropylene is 1 mass% or more.

<32> The film according to any one of <1> to <15> and <23> to <31>, wherein
a content of a resin constituting a spherical phase is 0.05 mass% or more and 20 mass% or less.

<33> The film according to any one of <1> to <15> and <23> to <32>, wherein
a spherical phase has an average particle size of 1 nm or more and 2 $\mu$m or less.

<34> The film according to any one of <1> to <15> and <23> to <33>, wherein
a phase containing at least one of a styrene elastomer, an ethylene/$\alpha$-olefin copolymer (including those in which ethylene is present as a comonomer), an olefin resin with a polar group introduced, or a styrene resin with a polar group introduced is included as a spherical phase of the dispersed phase.

<35> The film according to <34>, wherein
a content of a resin constituting the phase containing at least one of a styrene elastomer, an ethylene/$\alpha$-olefin copolymer (including those in which ethylene is present as a comonomer), an olefin resin with a polar group introduced, or a styrene resin with a polar group introduced is 0.5 mass% or more and 15 mass% or less.

<36> The film according to any one of <1> to <15> and <23> to <35>, wherein

> waste derived from an absorbent article is used as part of a raw material, and
> waste derived from an absorbent article is used as a raw material of at least the flat phase in the dispersed phase.

<37> The film according to any one of <1> to <15> and <23> to <36>, wherein
the film is used as a packaging film.

<38> The film according to any one of <1> to <15> and <23> to <37>, wherein
glossiness of a surface of the film is 80 or less.

[Examples and Comparative Examples]

Although Examples and Comparative Examples of the above embodiment will be described below, the present invention is not limited to the configurations of the following Examples.

(Raw material)

As virgin materials of polyethylene (PE) forming the first raw material, the following linear low-density polyethylene (LLDPE) products with different melt flow rates (MFR) were used. Note that in the following Tables 1 to 5, MFR values are shown without units to distinguish between the polyethylene (PE) products. Further, as the MFR values of polyethylene, those listed in the manufacturer's catalog for each product (190°C, load of 2.16 kg).

·Evolue SP2510 (manufactured by Prime Polymer Co., Ltd., MFR: 1.5 g/10 min)
·Evolue SP2020 (manufactured by Prime Polymer Co., Ltd., MFR: 2.3 g/10 min)
·Evolue SP2540 (manufactured by Prime Polymer Co., Ltd., MFR: 3.8 g/10 min)
·UJ317 (manufactured by Japan Polyethylene Corporation, MFR:6.0 g/10 min)
·ULTZEX 2520F (manufactured by Prime Polymer Co., Ltd., MFR: 2.2 g/10 min)

As a recycled material containing polypropylene (PP) as a main component, which constitutes the second raw material, a recycled material 1,2 was used.

The recycled material 1 is obtained by pelletizing, with a single-screw extruder, remnants generated when the crotch portion is cut in the manufacturing process of Merries (registered trademark) Pants Smooth Air Through L size (manufactured in 2022), which are baby diapers manufactured by Kao Corporation. The average composition of the recycled material 1 is 84 mass% of polypropylene (PP), 4 mass% of a styrene elastomer, and 2 mass% of polyurethane (PU).

The recycled material 2 is obtained by pelletizing, with a single-screw extruder, remnants generated when the rounded portion is cut in the manufacturing process of Laurie (registered trademark) Happy Bare Skin Especially Heavy Daytime Use 25 cm with Wings (manufactured in 2022), which are sanitary napkins manufactured by Kao Corporation. The average composition of the recycled material 2 is 30 mass% of polyethylene (PE), 35 mass% of polypropylene (PP), 2 mass% of polyethylene terephthalate (PET), and 28 mass% of calcium carbonate. The raw material configuration of the recycled material may vary depending on the configuration of the product from which it is generated. However, it is preferable to control the blending ratio of the recycled material in the first raw material within the range of 20 to 50 mass% of PP in the film, 0 to 5 mass% of PET in the film, 0 to 5 mass% of PU in the film, and 50 mass% or less of the total of the above resin, from the viewpoints of the quality of the film and reduction of virgin materials.

As virgin materials of polypropylene (PP) forming the second raw material, the following products with different melt flow rates (MFR) were used. Note that in the following Table 4,5, MFR values are shown without units to distinguish between the polypropylene products. Further, as the MFR values of polypropylene, those listed in the manufacturer's catalog for each product (230°C, load of 2.16 kg).

·F300SP (manufactured by Prime Polymer Co., Ltd., MFR: 2 g/10 min)
·PM600A (manufactured by SunAllomer Ltd., MFR: 7.5 g/10 min)
·3155E3 (manufactured by Exxon Mobil Corporation, MFR: 36 g/10 min)
·PLB00A (manufactured by SunAllomer Ltd., MFR: 70 g/10 min)
·MF650Y (manufactured by LyondellBasel, MFR: 1800 g/10 min)

As polyethylene terephthalate (PET), TRN-RTJ (manufactured by TEIJIN LIMITED) was used.

As a dispersion aid, a dispersion aid 1,2 was used. As the dispersion aid 1, Vistamaxx Performance Polymer 7050BF (manufactured by Exxon Mobil Corporation) that is an ethylene-propylene copolymer was used. As the dispersion aid 2, TUFTEC M C5025 (manufactured by Asahi Kasei Corporation) that is a maleic anhydride-modified hydrogenated styrene-based thermoplastic elastomer was used.

As an inorganic material constituting the inorganic material phase, calcium carbonate and titanium oxide were used. Specifically, as calcium carbonate, calcium carbonate contained in repelletized products obtained from production losses of moisture-permeable films for Merries that were baby diapers manufactured by Kao Corporation (a blend of ULTZEX 2520F (manufactured by Prime Polymer Co., Ltd., MFR: 2.2g /10 min) and calcium carbonate) was used. As titanium oxide, TET 1TA538 WHT-FD (manufactured by Toyocolor Co., Ltd.) that was a titanium oxide master batch was used.

Note that in the following Tables 1 to 5, the content of each raw material is shown as a mass ratio.

(Analysis method)

Some of the films prepared with the above raw materials were evaluated using TEM images to analyze the dispersed phase. Specifically, for each film, the ratio of the total cross-sectional area of the dispersed phase to the entire film (dispersed phase/entire film) was obtained. Further, for each film, the average aspect ratio of the flat phase and the ratio of the total cross-sectional area of the flat phase to the entire dispersed phase (flat phase/dispersed phase) were obtained. Further, for each film, the ratio of the total cross-sectional area of the spherical phase to the entire dispersed phase (spherical phase/dispersed phase) was obtained.

(Evaluation method)

The method of measuring tensile elongation and tensile strength, the method of measuring tear strength, the method for KES surface test, and the method of measuring glossiness are as described in the above embodiment.

(Reference Example and Comparative Example)

As Reference Example and Comparative Example, films were prepared using the production conditions and raw materials shown in Table 1. In both Reference Example and Comparative Example, a single-screw extruder was used for kneading and an inflation molding method was used for molding.

The film according to Reference Example is different from the configuration of the above embodiment in that it is formed of only polyethylene (PE), and has a configuration that provides good quality as a general film. That is, the film according to Comparative Example 1 serves as a reference for good quality when evaluating the films according to Examples.

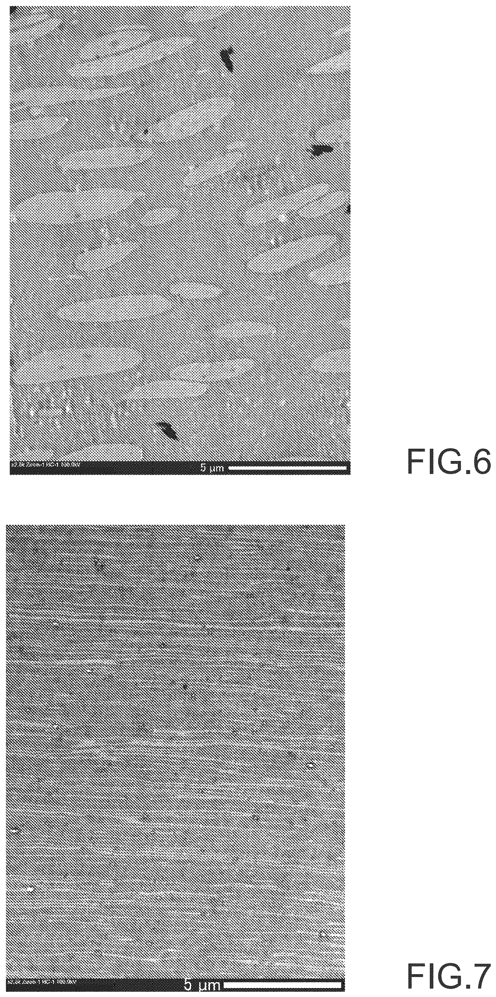

The film according to Comparative Example is different from the configuration of the above embodiment in that

the ratio $\eta B/\eta A$ of the viscosity $\eta B$ of polypropylene (PP) to the viscosity $\eta A$ of polyethylene (PE) is 1 or more. Fig. 6 shows the TEM image of the MD cross section of the film according to Comparative Example. In the film according to Comparative Example, the average aspect ratio of the flat phase obtained from the TEM image shown in Fig. 6 was 12.3, which was smaller than that in the above embodiment.

Table 1 shows the evaluations results of the films according to Reference Example and Comparative Example. In the film according to Comparative Example, all of the tensile elongation, tensile strength, and tear strength were lower than those of the film according to Reference Example. In particular, since the film according to Comparative Example has significantly low tensile elongation, making it difficult to use as a packaging film. Further, the film according to Comparative Example had MMD and SMD values by the KES surface test higher than those of the film according to Reference Example, and was found to have a rougher texture. Accordingly, it is conceivable that the film according to Comparative Example has glossiness significantly lower than that of the film according to Reference Example.

(Table 1)

| | | | Reference Example | Comparative Example |
|---|---|---|---|---|
| Production condition | | Kneading temperature | 180°C | 200°C |
| | | Molding temperature | 180°C | 200°C |
| Raw material | PE | MFR3.8 | 100% | - |
| | | MFR16.0 | - | 68.5% |
| | PP | MFR2.0 | - | 30% |
| | Dispersion aid 1 | | - | 1.5% |
| | Ratio $\eta B/\eta A$ | | - | 2.18 |
| Dispersed phase | Total cross-sectional area ratio (Dispersed phase/Entire film) | | - | 22.6% |
| | Flat phase | Average aspect ratio | - | 12.3 |
| | | Total cross-sectional area ratio(Flat phase/ Dispersed phase) | - | 63.2% |
| | Spherical phase | Total cross-sectional area ratio(Spherical phase /Dispersed phase) | - | 11.3% |
| Evaluation result | Tensile elongation (%) | | 1134 | 87 |
| | Tensile strength (N/($\mu$m·cm)) | | 0.38 | 0.21 |
| | Tear strength (N/$\mu$m) | | 0.109 | 0.077 |
| | KES surface test | MMD | 0.027 | 0.052 |
| | | SMD | 1.20 | 4.64 |
| | Glossiness | | 100 | 14.4 |

(Examples 1 to 7)

As Examples 1 to 7, films were prepared using the production conditions and raw materials shown in Table 2. In all of Examples 1 to 7, a single-screw extruder was used for kneading and an inflation molding method was used for molding. In all of Examples 1 to 7, the recycled material 1 was used as the second raw material. In all of the films according to Examples 1 to 7, the ratio $\eta B/\eta A$ of the viscosity $\eta B$ of polypropylene (PP) to the viscosity $\eta A$ of polyethylene (PE) fell within the range of the above embodiment.

Fig. 7 shows the TEM image of the MD cross section of the film according to Example 4. In the film according to Example 4, the average aspect ratio of the flat phase obtained from the TEM image shown in Fig. 7 was 29.5, and the average aspect ratio of the spherical phase formed of polyurethane (PU) was 1. Further, in the film according to Example 1, the average aspect ratio of the flat phase obtained similarly from the TEM image was 66.5, and the average aspect ratio of the spherical phase formed of polyurethane (PU) was 1. In all of the films according to Examples 1 and 4, the ratio of the total cross-sectional area of the flat phase to the entire dispersed phase was 80% or more.

Table 2 shows the evaluation results of the films according to Examples 1 to 7. In all of the films according to Examples 1 to 7, tensile elongation significantly higher than that of the film according to Comparative Example was achieved. Further, the evaluation results of Examples 1 to 7 showed a tendency that the tensile elongation of the film increased as the ratio $\eta B/\eta A$ of the viscosity $\eta B$ of polypropylene (PP) to the viscosity $\eta A$ of polyethylene (PE) decreased. Further, it was found that all of the films according to Examples 1 to 7 had MMD and SMD values by the KES surface test lower than those of the film according to Comparative Example, and could achieve a good texture. In addition, it was found that all of the films according to Examples 1 to 7 had glossiness lower than that of the film according to Reference Example, and could achieve a matte visual texture.

(Table 2)

| | | | Example | | | | | | |
|---|---|---|---|---|---|---|---|---|---|
| | | | 1 | 2 | 3 | 4 | 5 | 6 | 7 |
| Production condition | Kneading temperature | | 180°C | 180°C | 200°C | 230°C | 230°C | 230°C | 180°C |
| | Molding temperature | | 180°C | 180°C | 200°C | 230°C | 230°C | 230°C | 180°C |
| Raw material | PE | MFR1.5 | - | 68.5% | 68.5% | 68.5% | 88.5% | 49.2% | - |
| | | M FR3.8 | 68.5% | - | - | - | - | - | 70% |
| | Recycled material 1 | | 30% | 30% | 30% | 30% | 10% | 49.3% | 30% |
| | Dispersion aid 1 | | 1.5% | 1.5% | 1.5% | 1.5% | 1.5% | 1.5% | - |
| | Ratio $\eta B/\eta A$ | | 0.48 | 0.19 | 0.17 | 0.14 | 0.14 | 0.14 | 0.48 |
| Dispersed phase | Total cross-sectional area ratio (Dispersed phase/Entire film) | | 30.2% | - | - | 23.3% | - | - | - |
| | Flat phase | Average aspect ratio | 66.5 | - | - | 29.5 | - | - | - |
| | | Total cross-sectional area ratio(Flat phase/ Dispersed phase) | 97.4% | - | - | 85.0% | - | - | - |
| | Spherical phase | Total cross-sectional area ratio(Spherical phase /Dispersed phase) | 2.1% | - | - | 7.2% | - | - | - |
| Evaluation result | Tensile elongation (%) | | 620 | 714 | 1006 | 1029 | 993 | 1021 | 455 |
| | Tensile strength (N/($\mu$m·cm)) | | 0.19 | 0.26 | 0.39 | 0.34 | 0.36 | 0.32 | 0.17 |
| | Tear strength (N/$\mu$m) | | 0.042 | 0.031 | 0.052 | 0.054 | 0.063 | 0.022 | 0.040 |
| | KES surface test | MMD | 0.036 | 0.033 | 0.014 | 0.012 | 0.014 | 0.021 | 0.33 |
| | | SMD | 3.36 | 3.40 | 1.2 | 0.77 | 0.48 | 1.46 | 3.58 |
| | Glossiness | | 15.2 | 22.9 | 19.8 | 28.4 | 72.0 | 19.7 | 15.0 |

(Examples 8 to 10)

As Examples 8 to 10, films were prepared using the production conditions and raw materials shown in Table 3. In all of Examples 8 to 10, a single-screw extruder was used for kneading and an inflation molding method was used for molding. In all of Examples 8 to 10, the recycled material 1 was used as the second raw material. In Examples 8 and 9, calcium carbonate was further used as an inorganic material constituting the inorganic material phase. In Example 10, titanium oxide was further used as an inorganic material constituting the inorganic material phase. In all of the films according to Examples 8 to 10, the ratio $\eta B/\eta A$ of the viscosity $\eta B$ of polypropylene (PP) to the viscosity $\eta A$ of polyethylene (PE) fell within the range of the above embodiment.

Table 3 shows the evaluation results of the films according to Examples 8 to 10. In all of the films according to Examples 8 to 10, tensile elongation significantly higher than that of the film according to Comparative Example was achieved. Further, it was found that all of the films according to Examples 8 to 10 had MMD and SMD values by the KES surface test lower than those of the film according to Comparative Example, and could achieve a good texture. Further, it was found that all of the films according to Examples 8 to 10 had glossiness lower than that of the film according to Reference Example, and could achieve a matte visual texture.

(Table 3)

| | | | Example | | |
|---|---|---|---|---|---|
| | | | 8 | 9 | 10 |
| Production condition | Kneading temperature | | 230°C | 230°C | 200°C |
| | Molding temperature | | 230°C | 230°C | 200°C |
| Raw material | PE | MFR1.5 | 58.5% | 48.5% | - |
| | | MFR2.3 | - | - | 63% |
| | | MFR2.2 | 5.7% | 11.4% | - |
| | Recycled material 1 | | 30% | 30% | 30% |
| | Calcium carbonate | | 4.3% | 8.6% | - |
| | Titanium oxide | | - | - | 7% |
| | Dispersion aid 1 | | 1.5% | 1.5% | - |
| | Ratio $\eta$B/$\eta$A | | 0.15 | 0.17 | 0.33 |
| Evaluation result | Tensile elongation (%) | | 1056 | 1111 | 847 |
| | Tensile strength (N/($\mu$m·cm)) | | 0.35 | 0.36 | 0.25 |
| | Tear strength (N/$\mu$m) | | 0.078 | 0.089 | 0.050 |
| | KES surface test | MMD | 0.017 | 0.021 | 0.024 |
| | | SMD | 0.80 | 0.97 | 1.21 |
| | Glossiness | | 18.1 | 15.2 | 28.2 |

(Examples 11 to 24)

As Examples 11 to 24, films were prepared using the production conditions and raw materials shown in Tables 4 and 5. In all of Examples 11 to 24, a single-screw extruder was used for kneading and an inflation molding method was used for molding. In all of Examples 11 to 24, a virgin material of polypropylene (PP) was used as the second raw material. In Examples 11 to 16, the kneading temperature and the molding temperature were set to 230°C. In Examples 17 to 21, the kneading temperature and the molding temperature were set to 200°C. In Examples 22 to 24, polyethylene terephthalate (PET) was used as a resin constituting the spherical phase, and the kneading temperature and the molding temperature were set to 270°C. In all of the films according to Examples 11 to 24, the ratio $\eta$B/$\eta$A of the viscosity $\eta$B of polypropylene (PP) to the viscosity $\eta$A of polyethylene (PE) fell within the range of the above embodiment. Note that in all of Examples 22 to 24, the ratio of the viscosity of polyethylene terephthalate (PET) to the viscosity $\eta$A of polyethylene (PE) at the molding temperature was 0.11.

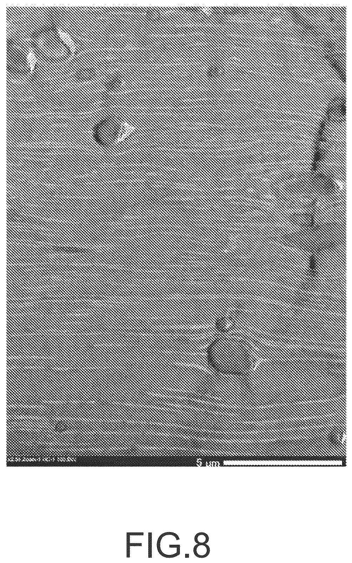

Fig. 8 shows the TEM image of the MD cross section of the film according to Example 24. In the film according to Example 24, the average aspect ratio of the flat phase obtained from the TEM image shown in Fig. 8 was 24.5, and the average aspect ratio of the spherical phase formed of polyethylene terephthalate (PET) was 2. Further, in the film according to Example 17, the average aspect ratio of the flat phase obtained similarly from the TEM image was 16.5. Further, in the film according to Example 21, the average aspect ratio of the flat phase obtained similarly from the TEM image was 52.7. Further, in all of the films according to Examples 17, 21, and 24, the ratio of the total cross-sectional area of the flat phase to the entire dispersed phase was 60% or more.

Tables 4 and 5 show the evaluation results of the films according to Examples 11 to 24. In all of the films according to Examples 11 to 24, tensile elongation significantly higher than that of the film according to Comparative Example was achieved. Further, when comparing the evaluation results of Examples 13 and 19 with the evaluation results of Examples 22 to 24, it was found that using polyethylene terephthalate (PET) significantly improved tear strength. It was found that all of the films according to Examples 11 to 24 had MMD and SMD values by the KES surface test lower than those of the film according to Comparative Example, and could achieve a good texture. In addition, it was found that all of the films according to Examples 11 to 24 had glossiness lower than that of the film according to Reference Example, and could achieve a matte visual texture.

(Table 4)

| | | | Example | | | | | |
|---|---|---|---|---|---|---|---|---|
| | | | 11 | 12 | 13 | 14 | 15 | 16 |
| Production condition | Kneading temperature | | 230°C | 230°C | 230°C | 230°C | 230°C | 230°C |
| | Molding temperature | | 230°C | 230°C | 230°C | 230°C | 230°C | 230°C |
| Raw material | PE | MFR1.5 | 68.5% | 68.5% | 68.5% | 68.5% | 68.5% | - |
| | | MFR3.8 | - | - | - | - | - | 68.5% |
| | PP | MFR2.0 | 30% | - | - | - | - | 30% |
| | | MFR7.5 | - | 30% | - | - | - | - |
| | | M FR36 | - | - | 30% | - | - | - |
| | | MFR70 | - | - | - | 30% | - | - |
| | | MFR1800 | - | - | - | - | 30% | - |
| | Dispersion aid 1 | | 1.5% | 1.5% | 1.5% | 1.5% | 1.5% | 1.5% |
| | Ratio $\eta B/\eta A$ | | 0.51 | 0.29 | 0.14 | 0.05 | 0.015 | 0.99 |
| Evaluation result | Tensile elongation (%) | | 1048 | 1118 | 978 | 1009 | 1041 | 1253 |
| | Tensile strength (N/($\mu$m·cm)) | | 0.40 | 0.31 | 0.34 | 0.39 | 0.28 | 0.44 |
| | Tear strength (N/$\mu$m) | | 0.046 | 0.040 | 0.042 | 0.018 | 0.009 | 0.060 |
| | KES surface test | MMD | 0.022 | 0.019 | 0.015 | 0.017 | 0.024 | 0.021 |
| | | SMD | 1.50 | 0.68 | 0.68 | 0.78 | 1.59 | 0.35 |
| | Glossiness | | 37.3 | 45.6 | 37.5 | 35.2 | 14.0 | 32.1 |

(Table 5)

| | | | Example | | | | | | | |
|---|---|---|---|---|---|---|---|---|---|---|
| | | | 17 | 18 | 19 | 20 | 21 | 22 | 23 | 24 |
| Production condition | Kneading temperature | | 200°C | 200°C | 200°C | 200°C | 200°C | 270°C | 270°C | 270°C |
| | Molding temperature | | 200°C | 200°C | 200°C | 200°C | 200°C | 270°C | 270°C | 270°C |
| Raw material | PE | MFR1.5 | 68.5% | 68.5% | 68.5% | 68.5% | 68.5% | 67% | 67% | 67% |
| | | MFR3.8 | - | - | - | - | - | - | - | - |
| | PP | MFR2.0 | 30% | - | - | - | - | - | - | - |
| | | MFR7.5 | - | 30% | - | - | - | - | - | - |
| | | MFR36 | - | - | 30% | - | - | 27% | 23% | 14% |
| | | MFR70 | - | - | - | 30% | - | - | - | - |
| | | MFR1800 | - | - | - | - | 30% | - | - | - |
| | PET | | - | - | - | - | - | 3% | 7% | 16% |
| | Dispersion aid 1 | | 1.5% | 1.5% | 1.5% | 1.5% | 1.5% | - | - | - |
| | Dispersion aid 2 | | - | - | - | - | - | 3% | 3% | 3% |
| | Ratio $\eta B/\eta A$ | | 0.48 | 0.34 | 0.27 | 0.13 | 0.02 | 0.11 | 0.11 | 0.11 |

(continued)

| | | | Example | | | | | | | |
|---|---|---|---|---|---|---|---|---|---|---|
| | | | 17 | 18 | 19 | 20 | 21 | 22 | 23 | 24 |
| Dispersed phase | Total cross-sectional area ratio (Dispersed phase/Entire film) | | 31.8% | - | - | - | 46.8% | - | - | 28.4% |
| | Flat phase | Average aspect ratio | 16.5 | - | - | - | 52.7 | - | - | 24.5 |
| | | Total cross-sectional area ratio(Flat phase/ Dispersed phase) | 86.4% | - | - | - | 97.8% | - | - | 66.0% |
| | Spherical phase | Total cross-sectional area ratio(Spherical phase /Dispersed phase) | 7.6% | - | - | - | 1.9% | - | - | 28.8% |
| Evaluation result | Tensile elongation (%) | | 563 | 570 | 1091 | 1105 | 1106 | 1140 | 1071 | 1039 |
| | Tensile strength (N/($\mu$m·cm)) | | 0.27 | 0.25 | 0.42 | 0.42 | 0.42 | 0.41 | 0.36 | 0.39 |
| | Tear strength (N/$\mu$m) | | 0.034 | 0.029 | 0.035 | 0.019 | 0.013 | 0.077 | 0.094 | 0.149 |
| | KES surface test | MMD | 0.029 | 0.026 | 0.021 | 0.018 | 0.032 | 0.020 | 0.049 | 0.047 |
| | | SMD | 3.09 | 4.18 | 0.89 | 0.90 | 0.79 | 0.96 | 2.59 | 5.12 |
| | Glossiness | | 24.0 | 33.3 | 26.7 | 27.5 | 19.8 | 24.0 | 19.4 | 12.5 |

(Examples 25 to 27)

As Examples 25 to 27, films were prepared using the production conditions and raw materials shown in Table 6. In Example 25, a single-screw extruder was used for kneading and an inflation molding method was used for molding. Further, in Example 25, the recycled material 2 was used as the second raw material. In Example 26, a single-screw extruder and a twin-screw extruder were used in combination for kneading and an inflation molding method was used for molding. More specifically, in Example 26, before kneading with the single-screw extruder, kneading with the twin-screw extruder was performed. Further, in Example 26, the recycled material 1 was used as the second raw material, and titanium oxide was used as an inorganic material constituting the inorganic material phase. In Example 27, a single-screw extruder was used for kneading, and a T-die molding method was used for molding. Further, in Example 27, the recycled material 1 was used as the second raw material. In all of the films according to Examples 25 to 27, the ratio $\eta B/\eta A$ of the viscosity $\eta B$ of polypropylene (PP) to the viscosity $\eta A$ of polyethylene (PE) fell within the range of the above embodiment.

In the film according to Example 26, the average aspect ratio of the flat phase obtained similarly to the above from the TEM image was 30.0, and the average aspect ratio of the spherical phase formed of polyurethane (PU) was 1. Further, in the film according to Example 26, the ratio of the total cross-sectional area of the flat phase to the entire dispersed phase was 80% or more.

Table 6 shows the evaluation results of the films according to Examples 25 to 27. In all of the films according to Examples 25 to 27, tensile elongation significantly higher than that of the film according to Comparative Example was achieved. Further, it was found that all of the films according to Examples 25 to 27 had MMD and SMD values by the KES surface test lower than those of the film according to Comparative Example, and could achieve a good texture. It was found that all of the films according to Examples 25 to 27 had glossiness lower than that of the film according to Reference Example, and could achieve a matte visual texture.

(Table 6)

| | | | | Example | | |
|---|---|---|---|---|---|---|
| | | | | 25 | 26 | 27 |
| Production condition | Kneading temperature (twin-screw) | | | - | 160°C | - |
| | Kneading temperature (single-screw) | | | 270°C | 200°C | 230°C |
| | Molding temperature | | | 270°C | 200°C | 230°C |
| Raw material | PE | | MFR1.5 | 67% | - | 68.5% |
| | | | MFR2.3 | - | 63% | |
| | Recycled material 1 | | | | 30% | 30% |
| | Recycled material 2 | | | 30% | - | - |
| | Titanium oxide | | | - | 7% | - |
| | Dispersion aid 1 | | | - | - | 1.5% |
| | Dispersion aid 2 | | | 3% | - | - |
| | Ratio $\eta B/\eta A$ | | | 0.21 | 0.33 | 0.14 |
| Dispersed phase | Total cross-sectional area ratio (Dispersed phase/Entire film) | | | - | 25.1% | - |
| | Flat phase | Average aspect ratio | | - | 30.0 | - |
| | | Total cross-sectional area ratio(Flat phase/ Dispersed phase) | | - | 86.1% | - |
| | Spherical phase | Total cross-sectional area ratio(Spherical phase /Dispersed phase) | | - | 6.1% | - |
| Evaluation result | Tensile elongation (%) | | | 1130 | 967.3 | 916.7 |
| | Tensile strength (N/($\mu$m·cm)) | | | 0.35 | 0.30 | 0.28 |
| | Tear strength (N/$\mu$m) | | | 0.157 | 0.048 | 0.041 |
| | KES surface test | MMD | | 0.022 | 0.018 | 0.009 |
| | | SMD | | 0.44 | 0.93 | 1.13 |
| | Glossiness | | | 10.7 | 26.8 | 27.9 |

Industrial Applicability

According to the present invention, in a film in which polypropylene is dispersed in polyethylene, deterioration in quality due to polypropylene can be suppressed.

**Claims**

1.  A film in which a dispersed phase is dispersed in a matrix phase, comprising:

    a matrix phase containing polyethylene; and
    a dispersed phase containing polypropylene,
    the dispersed phase including at least a flat phase oriented in an MD direction, the flat phase having an average aspect ratio of 15 or more.

2.  The film according to claim 1, wherein
    a ratio of a total cross-sectional area of the flat phase to a total cross-sectional area of the dispersed phase in an image of the film taken with a transmission electron microscope is 60% or more.

3.  The film according to claim 1 or 2, wherein
    the dispersed phase further includes a spherical phase that includes a resin and has an aspect ratio of 3 or less.

4. The film according to claim 3, wherein
the spherical phase further contains at least one of polyethylene terephthalate or polyurethane.

5. The film according to any one of claims 1 to 4, wherein
the dispersed phase further includes an inorganic material phase.

6. The film according to any one of claims 1 to 5, wherein
a ratio of a total cross-sectional area of polyethylene to a total cross-sectional area of the film in an image of the film taken with a transmission electron microscope is 50% or more and 99% or less.

7. The film according to any one of claims 1 to 6, wherein
a ratio of a total cross-sectional area of polypropylene to a total cross-sectional area of the film in an image of the film taken with a transmission electron microscope is 1% or more and 50% or less.

8. The film according to any one of claims 1 to 7, which has a tensile elongation of 700% or more.

9. The film according to any one of claims 1 to 8, which has tensile strength of 0.23 N/($\mu$m·cm) or more.

10. The film according to any one of claims 1 to 9, which has tear strength of 0.015 N/ $\mu$m or more.

11. The film according to any one of claims 1 to 10, which has MMD by a KES surface test of 0.05 or less.

12. The film according to any one of claims 1 to 11, which has SMD by a KES surface test of 3.0 or less.

13. The film according to any one of claims 1 to 12, wherein
glossiness of a surface of the film is 80 or less.

14. The film according to any one of claims 1 to 13, wherein
wettability of a surface of the film is 40 mN/m or more.

15. The film according to any one of claims 1 to 14, wherein
waste derived from an absorbent article is used as part of a raw material.

16. A method of producing a film in which a dispersed phase is dispersed in a matrix phase,
comprising:

molding a kneaded product into a film, the kneaded product being obtained by kneading a first raw material that contains polyethylene and constitutes the matrix phase and a second raw material containing polypropylene as a component constituting the dispersed phase,
a ratio $\eta$B/$\eta$A of viscosity $\eta$B of polypropylene contained in the second raw material at a molding temperature during the molding of the film to viscosity $\eta$A of the first raw material at the molding temperature being 0.015 or more and less than 1.

17. The method of producing a film according to claim 16, wherein
the second raw material includes waste derived from an absorbent article.

18. The method of producing a film according to claim 16 or 17, wherein
a single-screw extruder is used to knead the first raw material and the second raw material.

19. The method of producing a film according to any one of claims 16 to 18, wherein
the kneaded product is molded into a film using an inflation molding method.

20. The method of producing a film according to any one of claims 16 to 19, wherein
the second raw material further includes, as a component constituting the dispersed phase, at least one of a thermoplastic resin or a thermosetting resin having a melting point 100°C or more higher than that of the first raw material.

21. The method of producing a film according to any one of claims 16 to 20, wherein

a surface of the molded film is subjected to corona treatment.

22. The method of producing a film according to any one of claims 16 to 21, wherein the molding temperature is 200°C or more and 300°C or less.

Flat phase

Matrix phase

# FIG.1

START

Raw material preparation ⎯ S01

Kneading ⎯ S02

Film molding ⎯ S03

END

# FIG.2

20

FIG.3

5 μm

14.3 μm

FIG.4

FIG.5

FIG.6

FIG.7

FIG.8

## INTERNATIONAL SEARCH REPORT

| International application No. |
|---|
| **PCT/JP2023/024865** |

| | |
|---|---|
| **A.    CLASSIFICATION OF SUBJECT MATTER** | |
| *C08J 5/18*(2006.01)i <br> FI:  C08J5/18 | |
| According to International Patent Classification (IPC) or to both national classification and IPC | |

**B.    FIELDS SEARCHED**

Minimum documentation searched (classification system followed by classification symbols)

C08J5/18

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2011-46190 A (BANDO CHEMICAL INDUSTRIES, LTD.) 10 March 2011 (2011-03-10) <br> claims, paragraphs [0048]-[0057], [0072]-[0076], examples, drawings | 1-2, 5-14 |
| Y | | 16, 18-19, 21-22 |
| A | | 3-4, 15, 17, 20 |
| Y | JP 2000-63533 A (CHISSO CORPORATION) 29 February 2000 (2000-02-29) <br> claims, paragraphs [0015]-[0028], examples | 16, 18-19, 21-22 |
| A | | 3-4, 15, 17, 20 |
| A | JP 9-141791 A (DAICEL CHEM. IND. LTD.) 03 June 1997 (1997-06-03) <br> entire text | 1-22 |
| A | JP 2008-8138 A (TORAY INDUSTRIES, INC.) 17 January 2008 (2008-01-17) <br> entire text | 1-22 |
| A | JP 2014-234481 A (BRIDGESTONE CORPORATION) 15 December 2014 (2014-12-15) <br> entire text | 1-22 |

☐ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 August 2023** | **05 September 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
Information on patent family members

International application No.

**PCT/JP2023/024865**

| Patent document cited in search report | | | Publication date (day/month/year) | Patent family member(s) | Publication date (day/month/year) |
|---|---|---|---|---|---|
| JP | 2011-46190 | A | 10 March 2011 | (Family: none) | |
| JP | 2000-63533 | A | 29 February 2000 | (Family: none) | |
| JP | 9-141791 | A | 03 June 1997 | (Family: none) | |
| JP | 2008-8138 | A | 17 January 2008 | (Family: none) | |
| JP | 2014-234481 | A | 15 December 2014 | (Family: none) | |

Form PCT/ISA/210 (patent family annex) (January 2015)

**EP 4 741 447 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002052532 A

- JP 2004182957 A